# EUROPEAN PATENT APPLICATION

(11) **EP 1 559 483 A1**
(43) Date of publication of application: **03.08.2005**
(21) Application number: 04100356.7
(22) Date of filing: 02.02.2004
(51) Int. Cl.: B05D 3/12, B05D 7/20, B60S 1/38

(54) **Coated wire comprising a metal core and a thermoplastic coating having a matt appearance and process for making it**

(71) Applicant: N.V. BEKAERT S.A., 8550 Zwevegem (BE)
(72) Inventor: ADRIAENSEN, Ludo, 8540, DEERLIJK (BE); BOSTOEN, Joos, 8880, SINT-ELOOIS-WINKEL (BE); LEPLAE, Alain, 8560, MOORSLEDE (BE); VANDEWALLE, Gerard, 8301, KNOKKE-HEIST (BE)

(57) **Abstract**

The invention relates to a coated wire comprising a metal core and a thermoplastic coating. The thermoplastic coating has a gloss of less than 45 determined by using a reflectometer geometry of 60 ° as specified in ISO method 2813.

The thermoplastic coating has preferably a surface roughness determined by the Ra value higher than 0.15 µm.

## Description

### Field of the invention.

The invention relates to a coated wire comprising a metal core and a thermoplastic coating having a matt appearance.
The invention further relates to a method of manufacturing such a coated wire and to the use of a coated wire for the reinforcement of a wiper blade.

### Background of the invention.

Wires coated with a thermoplastic coating have to meet a number of requirements.
A first requirement is that a good adhesion with the metal core has to be obtained.
Furthermore, the adhesion should be maintained during the life time of the wiper element; even when it is exposed to a humid environment and/or to water, snow and ice.
In many applications the thermoplastic coating should be sufficiently deformable so that the reinforcement element keeps its flexibility.
In many applications a uniform, matt appearance of the coating is required. Due to the exposure to the sun and to humidity, the gloss of a wire coated with a thermoplastic coating known in the art is disappearing.

### Summary of the invention.

It is an object of the present invention to provide a coated wire having a homogeneous, matt appearance.
It is another object of the invention to provide a method of manufacturing a coated wire.
It is a further object of the invention to provide the use of a coated wire for the reinforcement of a wiper blade.

According to a first aspect of the present invention, a coated wire having a matt appearance is provided.
The wire comprises a metal core and a thermoplastic coating.
The thermoplastic coating has a gloss of less than 45. More preferably, the thermoplastic coating has a gloss of less than 30.

Most preferably, the gloss of the thermoplastic coating is less than 15, for example less than 10 as for example 5.
The gloss is determined using a reflectometer geometry of 60° as specified in ISO method 2813.

The thermoplastic coating has a surface roughness expressed by means of the Ra value higher than 0.15 µm. More preferably, the Ra value of the thermoplastic coating is higher than 0.50 µm or even higher than 0.70 µm.
Ra is defined as the arithmetical mean deviation of the profile, this is the area between the roughness profile and its mean line, or the integral of the absolute value of the roughness profile height over the evaluation length.

All surfaces of a coated wire according to the present invention may have a Ra value higher than 0.15 µm. However, this is not always necessary. In case of a wire having a rectangular or square cross-section for example, only one or some of the surfaces of the wire may have a high surface roughness.

The metal core may comprise any elongated metal or metal alloy element. Preferred metal cores comprise steel wires.

The metal core may have any cross-section, such as a round cross-section, a rectangular or a substantially rectangular cross-section such as a rectangular cross-section having rounded edges.
Also metal cores with a I-, a C- or a zeta profile can be considered.

The metal core may be coated with any thermoplastic coating known in the art such as polyamides, polyesters, polyetheretherketones (PEEK) and fluoropolymers and copolymers.

Polyester coatings are preferred.

Suitable polyester coatings are polyethylene terephtalate (PET), polyethylene naphtalate (PEN) and polybutylene terephtalate (PBT). Within the context of the present application the terms "polyethylene terephtalate", "polyethylene naphtalate" and "polybutylene terephtalate" denote not only homopolymers of ethylene therephtalate, ethylene napthalate and butylene terephtalate but also copolymers of ethylene terephtalate containing for example not more than 20% of other copolymerized units, e.g. derived from other acids than terephtalic acid, such as isophtalic acid or from other glycols than ethylene glycol. The polymer may also contain mixtures of polymers in order to modify certain properties.

Polyethylene terephtalate has the advantage of having good barrier properties e.g. to water and of having a good adhesion with a properly prepared steel wire.
Polyethylene naphtalate has even better barrier properties than polyethylene terephtalate but has the drawback of being more expensive than polyethylene terephtalate.

The thermoplastic coating can be applied by any conventionally used technique.
Preferably, the thermoplastic coating is applied by extrusion.

The thickness of the thermoplastic coating ranges preferably from 15 µm to 250 µm, and more preferably from 30 µm to 100 µm.

In order to improve the corrosion resistance of the metal core, a metal or metal alloy coating can be applied on the metal core before the thermoplastic coating is applied.
The metal or metal alloy coating comprises for example a zinc coating or a zinc alloy coating, such as a zinc-aluminium or a zinc-nickel coating.
A preferred zinc-aluminium coating comprises between 2 and 15 % Al. Possibly, between 0.1 and 0.4 % of a rare earth element such as Ce and/or La can be added in order to improve properties like fluidity and wettability of the melt.

The zinc alloy layer preferably has a thickness higher than 15 g/m². For some application a thickness higher than 50 g/m², for example 70 g/m² is required.

As described in WO02/00481 a coating system comprising a zinc or zinc alloy layer and a polyester coating offers the metal core an excellent corrosion protection not only at the coated surfaces of the metal core but also at surfaces that are not coated, as for example at the cut ends.

According to a second aspect of the invention, a method of manufacturing a coated wire having a low gloss thermoplastic coating is provided.
The method comprises the steps of
- providing a metal core;
- applying a thermoplastic coating on said metal core;
- treating the thermoplastic coating to obtain a gloss of less than 45.

The thermoplastic coating can be applied by any technique known in the art. A preferred technique comprises extrusion.

The method may further comprise the step of
- applying a metal or metal alloy coating on said metal core before the application of said thermoplastic coating.

The metal or metal alloy coating comprises preferably a zinc or zinc alloy coating, such as a zinc-aluminium or a zinc-nickel coating.
The metal or metal alloy layer can be applied by any conventional technique such as chemical plating, melt plating, melt spraying and electroplating.
A preferred method to apply the zinc alloy layer is by hot dip.

The treatment of the thermoplastic coating may comprise the brushing of the thermoplastic coating.
However, a preferred technique comprises sand blasting or grit blasting of the thermoplastic coating.
By sand blasting or grit blasting a homogeneous matt appearance can be obtained.

According to a third aspect of the invention, the use of a coated wire as defined above for the reinforcement of a wiper blade.

Generally, a wiper element is formed by a wiper blade made of an elastomeric material such as rubber. Conventionally, the wiper blade is reinforced by one or more elongated metal elements inserted in one or more longitudinally extending grooves of the wiper blade.
The reinforcement elements facilitate the wiping contact with the surface to be wiped by equalizing the forces needed for wiping.
Typically, the surface to be wiped is a curved glass surface.
The reinforcement elements have to be readily flexible throughout their length in a direction toward and away from the windshield to allow the wiper element to conform to the contour of the windshield so that efficient cleaning of the windshield can be obtained.
In addition, the reinforcement elements have limited flexibility in a direction transverse thereto to provide some rigidity for the wiper element as it is driven back and forth across the glass.

The metal core of a coated wire used for the reinforcement of a wiper blade may comprise any metal or metal alloy.
Preferably, the metal core comprises a steel wire, such as a high or low carbon steel wire, a stainless steel wire, a Cr alloyed steel wire.
The metal core may have any cross-section, as for example a round cross-section or a rectangular or substantially rectangular cross-section such as a rectangular cross-section having rounded edges.

The metal core has preferably a width between 1 mm and 15 mm, for example 2.5 mm, 4.10 mm or 7 mm.
The thickness of the metal core preferably ranges from 0.50 to 1.30 mm. The thickness is for example 0.70 mm.

A tensile strength of at least 1400 N/mm² is preferred, more preferably the tensile strength is greater than 1500 N/mm², for example 1800 or 2000 N/mm².
To obtain the desired tensile strength the carbon content is greater than 0.35 %. More preferably, the carbon content ranges between 0.60 and 0.85 %.

As wiper elements have to withstand all weather conditions, it is necessary that the metal elements have a high corrosion resistance.
In order to improve the corrosion resistance of the steel wire, a zinc or zinc alloy coating can be applied on the steel wire before the application of the thermoplastic coating.
The zinc alloy coating comprises for example a zinc-aluminium coating.

As the automotive industry is looking for black colored metal wires, having a homogeneous appearance, this imposes a further requirement to the reinforcing elements of a wiper blade.
Preferably, the reinforcement elements have a matt appearance. Most preferably, the gloss of the reinforcement element is similar to that of the elastomeric material.

Possibly, for fixing purposes, the coated wire may be provided with a number of notches.
The notch or notches are preferably made at the longitudinal external side of the element, near its end.

The notches can be created by a material removing operation. Suitable material removing operations are cutting, sawing, stamping or punching.

The notch can have any shape. In principle, any shape adapted to locate a claw is possible. Possibly, the notches have a rectangular or triangular shape.
Alternatively, a notch can be defined by a pair of longitudinally removed abutments, adapted to locate a claw in between these abutments.

### Description of the preferred embodiments of the invention.

An example of a coated wire according to the present invention comprises a flattened steel wire with a thickness of 1 mm and a width of 7.20 mm as metal core.
The steel wire has a carbon content between 0.50 and 0.70 % and is characterised by a tensile strength between 1600 and 1800 N/mm².

The steel wire is coated with a zinc-aluminium coating and a PET coating on top of this zinc-aluminium coating.
The zinc-aluminium coating comprises for example 90 % Zn and 10 % Al. The thickness of the zinc-aluminium coating is 60 g/m².
A PET coating is applied on the zinc-aluminium coating. The PET coating is black colored.

The above-described coated wire is manufactured as follows:
A steel wire is drawn to the desired diameter in various subsequent steps.
The steel wires are subjected to a hot dip treatment to apply the zinc alloy coating.
The coated wire is rolled into a flat wire in a subsequent step. A PET coating is applied by an extrusion process.
Subsequently, the coated wire is grit blasted. The grit blasting is performed by using a mixture of glass and ceramic particles.

The gloss of the coated wire is determined before and after the grit blasting by using a reflectometer geometry of 60 ° as specified in ISO method 2813.

Before the grit blasting the gloss is between 70 and 85, for example 81. After the grit blasting the gloss is reduced to a value lower than 15, for example 11.

The roughness, expressed by means of the Ra value, is increased from 0.07 µm before the grit blasting to 0.70 µm after the grit blasting.

The above-described coated wire is very suitable to be used to reinforce a wiper blade.
For the reinforcement of a wiper blade, one or more coated wires are inserted in one or more extending grooves of a rubber wiper blade.
It has been shown that the friction between the coated wired and the rubber is reduced in case the coated wire is sand blasted to a higher degree, i.e. in case the coated wire has a higher roughness.

## Claims

1. A coated wire comprising a metal core and a thermoplastic coating, said thermoplastic coating having a gloss of less than 45 determined by using a reflectometer geometry of 60 ° as specified in ISO method 2813.

2. A coated wire according to claim 1, whereby said thermoplastic coating has a gloss of less than 10.

3. A coated wire according to claim 1 or 2, whereby said thermoplastic coating has a surface roughness determined by the Ra value higher than 0.15 µm.

4. A coated wire according to any one of the preceding claims, whereby said metal core comprises a steel wire.

5. A coated wire according to any one of the preceding claims, whereby said thermoplastic coating comprises a material selected from the group consisting of polyamides, polyesters, polyetheretherketones and fluoropolymers and copolymers thereof.

6. A coated wire according to any one of the preceding claims, whereby said metal core is coated with a metal or metal alloy coating before said thermoplastic coating is applied.

7. A coated wire according to claim 6, whereby said metal or metal alloy coating comprises zinc or a zinc alloy coating.

8. A method of manufacturing a coated wire comprising a metal core and a thermoplastic coating, said method comprising the steps of
- providing a metal core;
- applying a thermoplastic coating on said metal core;
- treating the thermoplastic coating to obtain a gloss of less than 45.

9. A method according to claim 8, whereby said method further comprises the step of
- applying a metal or metal alloy coating on said metal core before the application of said thermoplastic coating.

10. A method according to claim 8 or 9, whereby said treating of the thermoplastic coating comprises brushing of the thermoplastic coating.

11. A method according to any one of claims 8 to 9, whereby said treating of the thermoplastic coating comprises sand blasting or grit blasting of the thermoplastic coating.

12. A method according to any one of claims 8 to 11, whereby the thermoplastic coating is applied by extrusion.

13. Use of a coated wire as defined in any one of claims 1 to 7 for the reinforcement of a wiper blade.
